# EUROPÄISCHE PATENTSCHRIFT

(11) **EP 0 809 745 B1**
(45) Veröffentlichungstag und Bekanntmachung des Hinweises auf die Patenterteilung: **12.08.1998**
(21) Anmeldenummer: 96901314.3
(22) Anmeldetag: 20.01.1996
(51) Int. Cl.: E05C 17/04, E05D 7/10, F16B 39/02

(54) **KLAPPENHALTER**
FLAP MOUNT
FIXATION DE PORTE

(30) Priorität: 16.02.1995 DE 19505164
(43) Veröffentlichungstag der Anmeldung: 03.12.1997
(73) Patentinhaber: Karl Simon GmbH & Co. KG, 78733 Aichhalden (DE)
(72) Erfinder: KING, Wilhelm, D-78730 Lauterbach (DE)
(74) Vertreter: Fleck, Hermann-Josef, Dr.-Ing.
(86) Internationale Anmeldenummer: EP9600232
(87) Internationale Veröffentlichungsnummer: WO9625579

(56) Entgegenhaltungen:
- DE-A- 2 648 117

## Beschreibung

Die Erfindung bezieht sich auf einen Klappenhalter zum Anbringen zwischen einem Möbelkorpus und einer Möbelklappe mit einer Schwenkstange, die einerseits mittels eines Lagerzapfens gelenkig an einem zugewandten Abschnitt eines Fußteils gelagert und daran mit einem Sicherungselement gesichert ist, wobei das Fußteil seinerseits an der Möbelklappe festgelegt ist und die andererseits gelenkig an dem Möbelkorpus angeschlossen ist.

Ein Klappenhalter dieser Art ist beispielsweise in der DE 26 48 117 A1 als bekannt ausgewiesen. Bei diesem bekannten Klappenhalter ist zum Sichern der Schwenkstange an dem Fußteil ein Sicherungselement in Form einer Federanordnung aus Federdraht vorgesehen. Die Federanordnung weist zwei freie Schenkel auf, die in eine Ringnut an einem überstehenden Abschnitt des Lagerzapfens eingreifen, so daß der Lagerzapfen eine entsprechende Anpassung aufweisen muß. Durch diese Anpassung entsteht insbesondere gemessen an einem Massenartikel, kein unwesentlicher Herstellungsaufwand. Auch ist beim Aufsetzen der Federanordnung auf das Fußteil ein gewisser Kraftaufwand erforderlich, der bei den kleinen Elementen zur Erschwerung der Montage führt.

Der Erfindung liegt die Aufgabe zugrunde, einen Klappenhalter der eingangs beschriebenen Art so zu gestalten, daß die Montage des Sicherungselementes an dem Klappenhalter einerseits und des Klappenhalters an dem vormontierten Fußteil andererseits leicht und schnell vorgenommen werden kann.

Diese Aufgabe wird mit den im Patentanspruch 1 angegebenen Merkmalen gelöst.

Hiernach ist also vorgesehen, daß das Sicherungselement auf seiner von dem Lagerzapfen abgewandten Seite an der Schwenkstange oder dem zugewandten Abschnitt des Fußteils mittels eines Führungsstückes verschieblich gehalten ist und auf seiner dem Lagerzapfen zugekehrten Seite einen Sicherungsabschnitt aufweist, der im montierten Zustand die Schwenkstange und den zugewandten Abschnitt des Fußteils im Bereich des Lagerzapfens zusammenhält.

Bei der Herstellung des Klappenhalters kann das Sicherungselement einfach und leicht auf die Schwenkstange aufgeschoben werden. Der so vorbereitete Klappenhalter kann bei der Montage an dem Möbel, nachdem das Fußteil separat angeschraubt ist, ohne Kraftaufwand an dem Lagerzapfen eingesetzt werden, wobei der Lagerzapfen wahlweise an dem Fußteil oder der Schwenkachse vorgesehen sein kann. Sodann braucht das Sicherungselement nur entlang der Schwenkstange oder, wenn es an dem Fußteil angebracht ist, entlang dem der Lagerstange zugekehrten Abschnitt in Richtung des Lagerzapfens geschoben zu werden. Auf diese Weise wird der Sicherungsabschnitt im Überlappungsbereich der Schwenkstange und des zugekehrten Abschnittes des Fußteiles über diesen Abschnitt bzw. die Schwenkstange geschoben, so daß die beiden gelenkig miteinander verbundenen Teile axial bezüglich des Lagerzapfens festgelegt sind.

Vorteilhaft ist eine Ausgestaltung derart, daß das Führungsstück eine durchgehende Aufnahme mit einer dem Querschnitt der Schwenkstange bzw. dem Abschnitt des Fußteils angepaßten lichten Weite aufweist und daß der Sicherungsabschnitt ein federndes Element aufweist, das im montierten Zustand im Überlappungsbereich der Schwenkstange und des Abschnittes über die Außenseite des Abschnittes bzw. der Schwenkstange geschoben ist. Das federnde Element liefert hierbei eine Haltekraft, wodurch das Sicherungselement in seiner aufgeschobenen Lage gehalten wird. Hierbei kann zum Erleichtern des Aufschiebens vorgesehen sein, daß das federnde Element an seinem freien Ende eine Auflaufschräge aufweist. Um das Sicherungselement dabei zuverlässiger gegen ein Verschieben festzulegen, ist es vorteilhaft, wenn es an seiner dem Abschnitt des Fußteils bzw. der Schwenkstange zugekehrten Innenseite einen Rastabsatz aufweist, mit dem es hinter einem Überstand des Lagerzapfens einrastbar ist.

Damit auch bei größerer Krafteinwirkung in axialer Richtung des Lagerzapfens sicher gewährleistet ist, daß die gelenkig miteinander verbundenen Teile zusammengehalten werden, kann weiterhin vorgesehen sein, daß der Sicherungsabschnitt mindestens einen starren Halteschenkel aufweist, der mit seiner Innenseite im Überlappungsbereich an dem Abschnitt des Fußteils bzw. der Schwenkstange anliegt. Eine geeignete Ausgestaltung ist dabei derart, daß zwei starre Halteschenkel vorgesehen sind, die mindestens um den Durchmesser des Überstandes des Lagerzapfens voneinander beabstandet sind.

Mit der Maßnahme, daß der Sicherungsabschnitt auf der dem federnden Element bezüglich der Schwenkstange gegenüberliegenden Seite einen sich von dem Führungsstück aus erstreckenden Gegenschenkel aufweist, kann gegebenenfalls eine zusätzliche Haltefunktion entgegen einem Verschieben in axialer Richtung des Lagerzapfens geboten werden.

Wenn das Sicherungselement einführseitig an dem Rand der Aufnahme angeschrägt ist, kann es besonders einfach auf die Schwenkstange bzw. den dieser zugekehrten Abschnitt des Fußteils aufgeschoben werden.

Die Erfindung wird nachfolgend anhand von Ausführungsbeispielen unter Bezugnahme auf die Zeichnungen näher erläutert. Es zeigen:
- Fig. 1: ein Ausführungsbeispiel eines Klappenhalters, bei dem an der Gelenkstelle zwischen einer Möbelklappe und einer Schwenkstange ein Sicherungselement vorgesehen ist,
- Fig. 2A bis 2C: ausschnittsweise einen Klappenhalter vor der endgültigen gelenkigen Verbindung mit der Möbelklappe und nach Herstellen der Verbindung in Seitenansicht bzw. in teilweise geschnittener Vorderansicht,
- Fig. 3A: eine vergrößerte Darstellung der gelenkigen Verbindung zwischen der Schwenkstange und dem Fußteil, wobei das aufgeschobene Sicherungselement geschnitten dargestellt ist,
- Fig. 3B: eine Seitenansicht des in Fig. 3A gezeigten Sicherungselementes von der linken Seite,
- Fig. 4: eine weitere genauere Darstellung der Verbindung zwischen der S chwenkstange und dem Fußteil, wobei ein weiteres Sicherungselement teilweise geschnitten gezeigt ist, und
- Fig. 5A und 5B: weitere Darstellungen der Verbindung zwischen der Schwenkstange und dem Fußteil mit einem anderen Sicherungselement in teilweise geschnittener Vorderansicht bzw. in Seitenansicht.

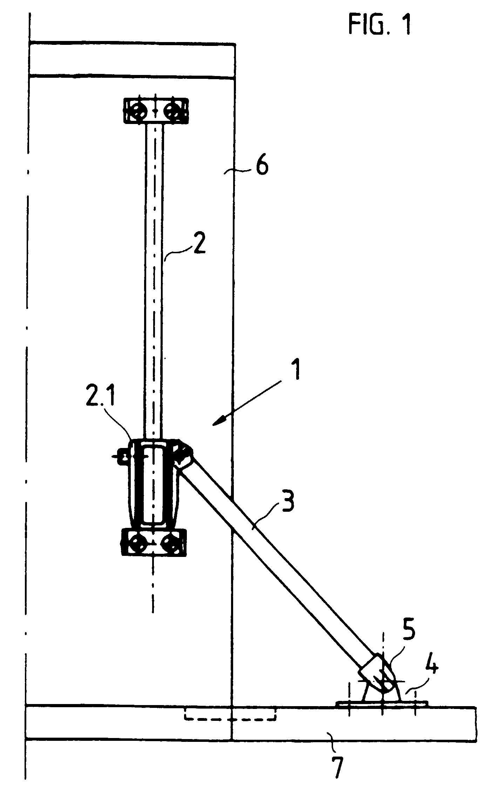

In Fig. 1 ist ein Klappenhalter 1 in Form eines Bremsklappenhalters dargestellt. Eine Bremsstange 2 mit einem Bremsgehäuse 2.1 ist vertikal an einer Möbelwand 6 befestigt. An dem Bremsgehäuse 2.1 ist die eine Seite einer Schwenkstange 3 angelenkt, während die andere Seite an einem Fußteil 4 angelenkt ist, das seinerseits auf einer Möbelklappe 7 angebracht ist. An der Gelenkstelle zwischen dem Fußteil 4 und der Schwenkstange 3 ist ein Sicherungselement 5 aufgeschoben, so daß die Schwenkstange 3 und das Fußteil 4 unverschiebbar in axialer Richtung in gelenkiger Verbindung zusammengehalten werden.

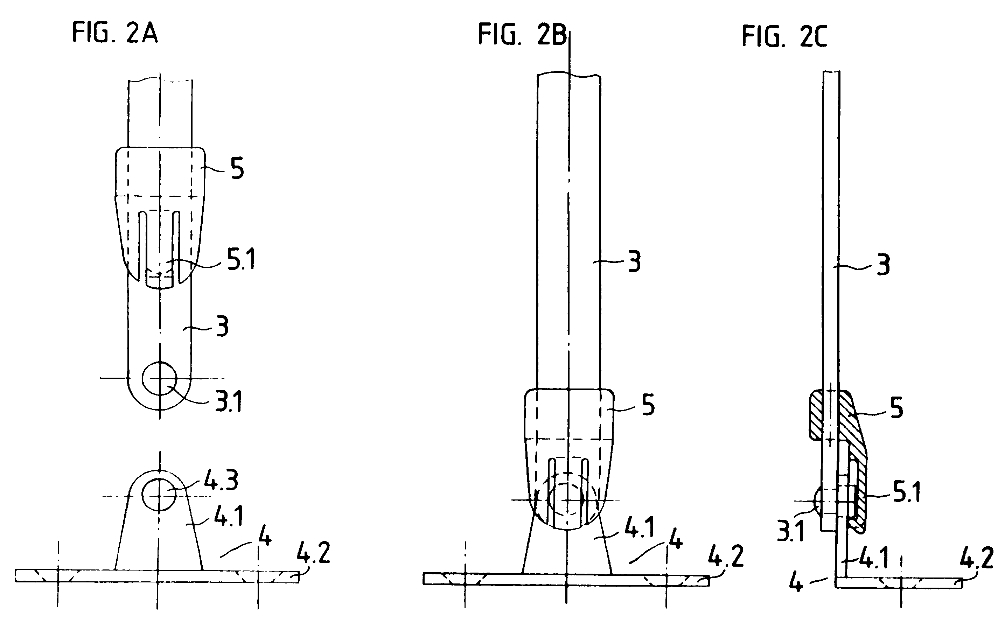

In den Fig. 2A bis 2C ist die gelenkige Verbindung zwischen der Schwenkstange 3 und dem Fußteil 4 genauer wiedergegeben. Die Fig. 2A zeigt die Schwenkstange 3 und das Fußteil 4 vor der Montage. Vorliegend ist ein Lagerzapfen 3.1 an der Schwenkstange 3 angebracht, der in eine entsprechende Bohrung eines zugewandten Abschnittes 4.1 des Fußteiles 4 einsetzbar ist. Das Fußteil 4 wird mit einem Befestigungsteil 4.2 vor der gelenkigen Verbindung mit der Schwenkstange 3 an der Möbelklappe 7 angebracht, wodurch die Handhabung einfach ist. Das Sicherungselement 5 ist von dem Lagerzapfen 3.1 entlang der Schwenkstange 3 weggeschoben.

In Fig. 2B ist die gelenkige Verbindung zwischen der Schwenkstange 3 und dem Fußteil 4 hergestellt und das Sicherungselement 5 ist über den Überlappungsbereich zwischen der Schwenkstange 3 und dem Fußteil 4 aufgeschoben und übergreift dabei den Zapfen 3.1, der in die Bohrung 4.3 eingesetzt ist. Der an der Verbindungsstelle aufgeschobene Teil des Sicherungselementes 5 weist dabei drei Schenkel auf, die mit zwei Schlitzen voneinander getrennt sind. Der mittlere Schenkel ist dabei als federndes Element 5.3 ausgebildet, so daß er über einen Überstand des Lagerzapfens 3.1 geschoben werden kann, wie insbesondere in der Fig. 2C ersichtlich ist, die das Sicherungselement 5 geschnitten wiedergibt. Auf diese Weise kann die Schwenkstange 3 in axialer Richtung nicht von dem Fußteil 4 wegbewegt werden, sondern ist an diesem sicher gelenkig festgelegt.

Ersichtlich ist, daß alternativ der Lagerzapfen 3.1 auch an dem Abschnitt 4.1 des Fußteiles 4 angebracht sein könnte, ohne daß die Schwenkstange 3 durch seitliches Verschieben von dem Lagerzapfen abgenommen werden könnte.

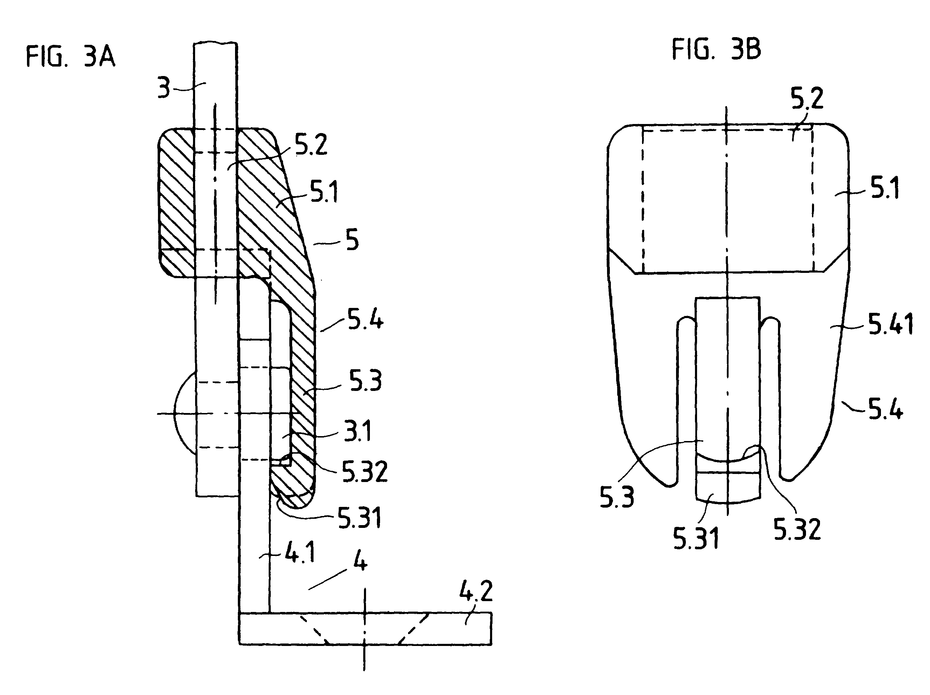

In den Fig. 3A und 3B ist die Sicherung der gelenkigen Verbindung zwischen der Schwenkstange 3 und dem Abschnitt 4.1 des Fußteils 4 mittels des Sicherungselementes 5 vergrößert dargestellt. Das Sicherungselement 5 ist hierbei ebenfalls auf die Schwenkstange 3 aufgeschoben und übergreift mit seinem mittleren Schenkel, der als federndes Element 5.3 ausgebildet ist, den Lagerzapfen 3.1. Das federnde Element 5.3 besitzt an seinem freien Ende eine Auflaufschräge 5.31 und hintergreift mit einem Rastabsatz 5.32 im aufgeschobenen Zustand den über die zugekehrte Seite des Abschnittes 4.1 überstehenden Lagerzapfen 3.1 umfangsseitig, so daß das Sicherungselement 5 nur nach Anheben des federnden Elementes 5.3 wieder auf der Schwenkstange 3 zurückgeschoben werden kann, um die gelenkige Verbindung freizugeben. Weiterhin ist in Fig. 3A ein Führungsstück 5.1 erkennbar, mit dem das Sicherungselement 5 an der Schwenkstange 3 verschieblich festgelegt ist, wobei in dem Führungsstück 5.1 eine an den Querschnitt der Führungsstange angepaßte Aufnahme 5.2 vorgesehen ist. In Fig. 3B ist darüberhinaus ersichtlich, daß der untere Teil des Sicherungselements 5, der einen Sicherungsabschnitt 5.4 bildet, beidseitig von dem federnden Element die bereits im Zusammenhang mit den Fig. 2A bis 2C angesprochenen Schenkel in Form der Halteschenkel 5.41 aufweist. Die Halteschenkel 5.41 sind relativ starr und soweit abstandet, daß sie im aufgeschobenen Zustand rechts und links neben dem Überstand des Lagerzapfens 3.1 auf dem Abschnitt 4.1 des Fußteils 4 aufliegen. Dadurch ergibt sich ein verbesserter Halt gegen axiales Verschieben der Schwenkstange 3 bezüglich des Fußteiles 4.

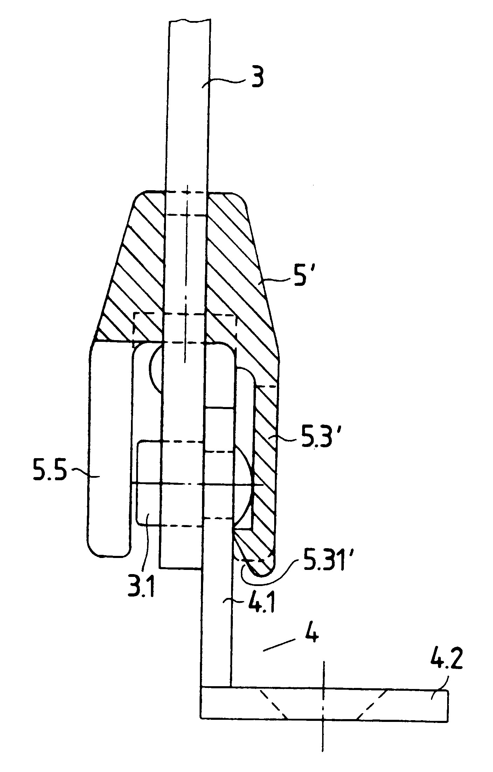

In Fig. 4 ist ein weiteres Ausführungbeispiel für ein Sicherungselement 5' dargestellt, das eine unveränderte Montage auf der linken oder rechten Seite der Möbelklappe 7 zuläßt. In diesem Beispiel ist der Lagerzapfen 3.1 an dem Abschnitt 4.1 des Fußteils 4 angebracht und durch eine entsprechende Bohrung der Schwenkstange 3 geschoben. Das Sicherungselement ist an der Warze des als Niet ausgebildeten Lagerzapfens 3.1 mit seinem federnden Element 5.3' festgelegt, in entsprechender Weise, wie bereits in den Fig. 3A und 3B erläutert. Auch entsprechende Halteschenkel wie in den Fig. 3A und 3B können vorgesehen sein. Darüberhinaus ist auf der dem federnden Element 5.3' bezüglich der Haltestange 3 gegenüberliegenden Seite des Sicherungselementes 5 mindestens ein starrer Gegenschenkel 5.5 vorgesehen, mit dem ein weiterer Halt gegen seitliches axiales Verschieben der Schwenkstange 3 gegenüber dem Fußteil 4 erzielt werden kann. Das Fußteil 4, an dem der Lagerzapfen 4.1 angebracht ist, kann nun, wie gezeigt, auf der rechten Seite der Schwenkstange 3 angeordnet werden, wobei der linsenförmige Kopf des Lagerzapfens 3.1 von dem federnden Element 5.3' übergriffen ist, oder er kann auf der linken Seite der Schwenkstange 3 angeordnet sein, wobei das durch die Schwenkstange 3 gesteckte Ende des Lagerzapfens 3.1 von dem federnden Element 5.3' übergriffen wird.

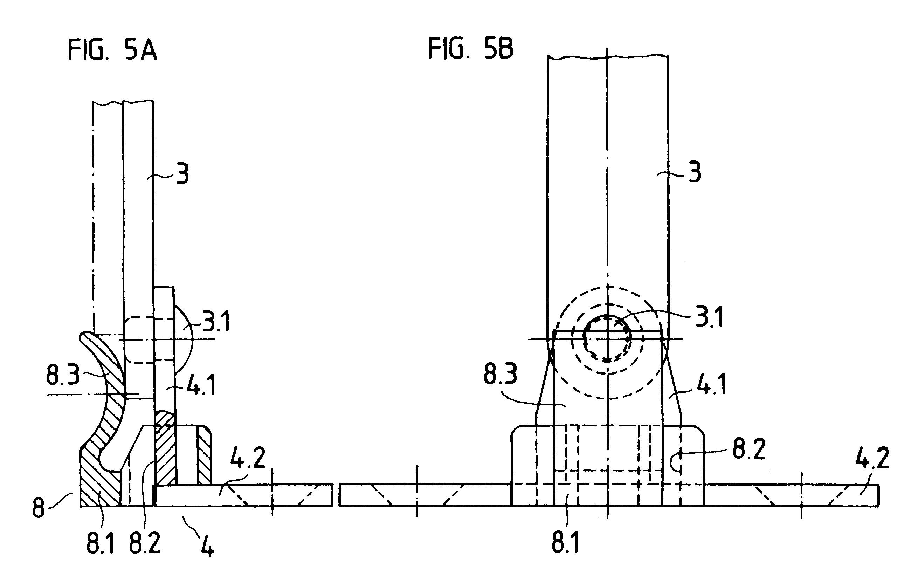

In den Fig. 5A und 5B ist ein Ausführungsbeispiel für ein weiteres Sicherungselement 8 dargestellt, das mit einem Führungsteil 8.1 mittels einer Aufnahme 8.2 an dem Abschnitt 4.1 des Fußteils 4 verschieblich gelagert ist. An dem Führungsabschnitt 8.1 ist ein nach oben in Richtung der Schwenkstange 3 zeigendes federndes Element 8.3 vorgesehen, das in Richtung zu dem federnden Element eine Einlaufrundung oder Einführschräge aufweist, an der bei der Montage die Schwenkstange 3, wie strichpunktiert dargestellt, eingeführt werden kann, bis sie mit einer Bohrung mit dem Lagerzapfen 3.1 zur Deckung kommt und auf diesen aufsetzbar ist. Anschließend wird das Sicherungselement 8 entlang dem Abschnitt 4.1 des Fußteiles 4 nach oben geschoben, so daß auch hierbei die gelenkige Verbindung zwischen der Schwenkstange 3 und dem Fußteil 4 gegen axiales Verschieben gesichert ist.

Vorzugsweise sind die beschriebenen Sicherungselemente aus einem widerstandsfähigen Kunststoff geformt.

## Patentansprüche

1. Klappenhalter zum Anbringen zwischen einem Möbelkorpus und einer Möbelklappe mit einer Schwenkstange, die einerseits mittels eines Lagerzapfens gelenkig an einem zugewandten Abschnitt eines Fußteils gelagert und daran mit einem Sicherungselement gesichert ist, wobei das Fußteil seinerseits an der Möbelklappe festgelegt ist, und die andererseits gelenkig an dem Möbelkorpus angeschlossen ist,
dadurch gekennzeichnet,
daß das Sicherungselement (5,5') auf seiner von dem Lagerzapfen (3.1) abgewandten Seite an der Schwenkstange (3) oder dem zugewandten Abschnitt (4.1) des Fußteils (4) mittels eines Führungsstückes (5.1) verschieblich gehalten ist und auf seiner dem Lagerzapfen zugekehrten Seite einen Sicherungsabschnitt (5.4) aufweist, der im montierten Zustand die Schwenkstange (3) und den zugewandten Abschnitt (4.1) des Fußteils (4) im Bereich des Lagerzapfens (3.1) zusammenhält.

2. Klappenhalter nach Anspruch 1,
dadurch gekennzeichnet,
daß das Führungsstück (5.1) eine durchgehende Aufnahme (5.2) mit einer dem Querschnitt der Schwenkstange (3) bzw. dem Abschnitt (4.1) des Fußteils (4) angepaßten lichten Weite aufweist und
daß der Sicherungsabschnitt (5.4) ein federndes Element (5.3, 5.3') aufweist, das im montierten Zustand im Überlappungsbereich der Schwenkstange (3) und des Abschnittes (4.1) über die Außenseite des Abschnittes (4.1) bzw. der Schwenkstange (3) geschoben ist.

3. Klappenhalter nach Anspruch 1 oder 2,
dadurch gekennzeichnet,
daß das federnde Element (5.3, 5.3') an seinem freien Ende eine Auflaufschräge (5.31, 5.31') aufweist.

4. Klappenhalter nach Anspruch 3,
dadurch gekennzeichnet,
daß das federnde Element (5.3, 5.3') an seiner dem Abschnitt (4.1) des Fußteils (4) bzw. der Schwenkstange (3) zugekehrten Innenseite einen Rastabsatz (5.32) aufweist, mit dem es hinter einem Überstand des Lagerzapfens (3.1) einrastbar ist.

5. Klappenhalter nach einem der Ansprüche 1 bis 4,
dadurch gekennzeichnet,
daß der Sicherungsabschnitt (5.4) mindestens einen starren Halteschenkel (5.41) aufweist, der mit seiner Innenseite im Überlappungsbereich an dem Abschnitt (4.1) des Fußteils (4) bzw. der Schwenkstange (3) anliegt.

6. Klappenhalter nach Anspruch 5,
dadurch gekennzeichnet,
daß zwei starre Halteschenkel (5.41) vorgesehen sind, die mindestens um den Durchmesser des Überstandes des Lagerzapfens voneinander beabstandet sind.

7. Klappenhalter nach einem der Ansprüche 2 bis 6,
dadurch gekennzeichnet,
daß der Sicherungsabschnitt (5.4) auf der dem federnden Element (5.3, 5.3') bezüglich der Schwenkstange (3) gegenüberliegenden Seite einen sich von dem Führungsstück (5.1) aus erstreckenden Gegenschenkel (5.5) aufweist.

8. Klappenhalter nach einem der Ansprüche 2 bis 7,
dadurch gekennzeichnet,
daß das Sicherungselement (5,5') einführseitig an dem Rand der Aufnahme (5.2) angeschrägt ist.

## Claims

1. Flap holder for attachment between the body of a piece of furniture and a furniture flap with a pivoting rod which on the one hand is flexibly mounted by means of an axle journal on a facing section of a foot portion, and is secured thereon by a securing member, the foot portion being in turn secured on the furniture flap, said pivoting rod on the other hand flexibly connected to the body of the piece of furniture,
characterised in that
the securing member (5,5') is movably held, on its side facing away from the axle journal (3.1), on the pivoting rod (3) or on the facing section (4.1) by means of a guide piece (5.1), and on its side facing the axle journal has a securing section (5.4) which, in the assembled condition, holds together the pivoting rod (3) and the facing section (4.1) of the foot portion (4) in the region of the axle journal (3.1).

2. Flap holder according to claim 1,
characterised in that
the guide piece (5.1) has a continuous receiving means (5.2) with a clear width adapted to the cross-section of the pivoting rod (3) or of the section (4.1) of the foot portion (4), and
in that the securing section (5.4) has a resilient member (5.3,5.3') which, in the assembled condition, is pushed, in the overlapping area of the pivoting rod (3) and of the section (4.1), over the outer side of the section (4.1) or of the pivoting rod (3).

3. Flap holder according to claim 1 or 2,
characterised in that
the resilient member (5.3,5.3') has on its free end a bevelled ramp (5.31,5.31').

4. Flap holder according to claim 3,
characterised in that
the resilient member (5.3,5.3') has on its inner side facing the section (4.1) of the foot portion (4) or of the pivoting rod (3), a resilient engagement fitting (5.32), by means of which it may be resiliently engaged behind a projection of the axle journal (3.1).

5. Flap holder according to one of claims 1 to 4,
characterised in that
the securing section (5.4) has at least one rigid retaining leg (5.41) which abuts with its inner side in the overlapping area on the section (4.1) of the foot portion (4) or of the pivoting rod (3).

6. Flap holder according to claim 5,
characterised in that
two rigid retaining legs (5.41) are provided, which are spaced apart from one another by at least the diameter of the projecting portion of the axle journal.

7. Flap holder according to one of claims 2 to 6,
characterised in that
the securing section (5.4) has on the side lying opposite the resilient member (5.3,5.3') with respect to the pivoting rod (3), a counter-leg (5.5) extending out from the guide piece (5.1).

8. Flap holder according to one of claims 2 to 7,
characterised in that
the securing member (5,5') is bevelled on the insert side at the edge of the receiving means (5.2).

## Revendications

1. Fixation de porte à monter entre le corps d'un meuble et une porte de meuble avec une tringle de pivotement qui d'une part est au moyen d'un tourillon monté sur un tronçon qui lui fait face d'un élément de pied et y est assujetti à l'aide d'un élément de sécurité, l'élément de pied étant à son tour fixé à la porte du meuble, et qui d'autre part est raccordée de manière articulée au corps du meuble,
caractérisée
en ce que l'élément de sécurité (5, 5') est, du côté non orienté vers le tourillon (3.1), maintenu au moyen d'une pièce de guidage (5.1) de manière coulissante sur la tringle de pivotement (3) ou sur le tronçon (4.1) qui lui fait face de l'élément de pied (4), et en ce que l'élément de sécurité (5, 5'), du côté qui fait face au tourillon, présente un tronçon de sécurité (5.4) qui à l'état assemblé réunit, dans la région du tourillon (3.1), la tringle de pivotement (3) et le tronçon (4.1) de l'élément de pied (4) qui lui fait face.

2. Fixation de porte suivant la revendication 1,
caractérisée
en ce que la pièce de guidage (5.1) présente un logement continu (5.2) avec une largeur intérieure adaptée à la section transversale de la tringle de pivotement (3) ou au tronçon (4.1) de l'élément de pied (4.1), et
en ce que le tronçon de sécurité (5.4) présente un élément à ressort (5.3, 5.3') qui, à l'état assemblé est, dans la zone de chevauchement de la tringle de pivotement (3) et du tronçon (4.1), glissé au-dessus de la face extérieure du tronçon (4.1) ou de la tringle de pivotement (3).

3. Fixation de porte suivant la revendication 1 ou 2,
caractérisée
en ce qu'à son extrémité libre, l'élément à ressort (5.3, 5.3') présente un biseau de butée (5.31, 5.31').

4. Fixation de porte suivant la revendication 3,
caractérisée
en ce qu'à son côté intérieur faisant face au tronçon (4.1) de l'élément de pied (4) ou à la tringle de pivotement (3), l'élément à ressort (5.3, 5.3') présente un épaulement d'encliquetage (5.32), par lequel il peut s'encliqueter derrière une surélévation du tourillon (3.1).

5. Fixation de porte suivant l'une quelconque des revendications de 1 à 4,
caractérisée
en ce que le tronçon de sécurité (5.4) présente au moins une aile de fixation rigide (5.41) qui dans la zone de chevauchement s'applique par sa face intérieure sur le tronçon (4.1) de l'élément de pied (4) ou sur la tringle de pivotement (3).

6. Fixation de porte suivant la revendication 5,
caractérisée
en ce que deux ailes de fixation rigides (5.41) sont prévues, qui sont distantes l'une de l'autre d'au moins le diamètre de la surélévation du tourillon.

7. Fixation de porte suivant l'une quelconque des revendications de 2 à 6,
caractérisée
en ce que sur sa face qui par rapport à l'élément à ressort (5.3, 5.3') est opposée à la tringle de pivotement (3), le tronçon de sécurité (5.4) présente une contre-aile (5.5) qui est issue de la pièce de guidage (5.1).

8. Fixation de porte suivant l'une quelconque des revendications de 2 à 7,
caractérisée
en ce que l'élément de sécurité (5, 5') est biseauté du côté introduction le long du bord du logement (5.2).
